# EUROPEAN PATENT APPLICATION

(11) **EP 2 602 696 A2**
(43) Date of publication of application: **12.06.2013**
(21) Application number: 12170309.4
(22) Date of filing: 31.05.2012
(51) Int. Cl.: G06F 3/041

(54) **Method and apparatus for configuring touch sensing parameters**

(30) Priority: 06.12.2011 KR 20110129481
(71) Applicant: Samsung Electronics Co., Ltd., Suwon-si, Gyeonggi-do, 443-742 (KR)
(72) Inventor: Oh, Seung Seok, 443-742 Gyeonggi-do (KR)
(74) Representative: Jenkins, Richard Gavin

(57) **Abstract**

A method and an apparatus for configuring touch sensing parameters are provided. The method for configuring touch sensing parameters in a mobile terminal includes sensing an environmental condition, extracting values of touch sensing parameters corresponding to the sensed environmental condition, setting the touch sensing parameters to the extracted values of touch sensing parameters, and performing touch sensing according to the set touch sensing parameters. A mobile terminal supporting the method may configure touch sensing parameters so as to enhance sensing of user touch input while preventing influence of a noise signal.

## Description

### BACKGROUND OF THE INVENTION

### 1. Field of the Invention:

The present invention relates to a method and apparatus for configuring touch sensing parameters. More particularly, the present invention relates to a method and apparatus that configure touch sensing parameters according to external conditions.

### 2. Description of the Related Art:

Historically, keypads have been widely used as input means for mobile terminals. However, due to rapid advances in touch sensing technologies, touchscreens or touch pads, which enable intuitive user interfaces with efficient space utilization, have been increasingly used as input means for modern mobile terminals.

Most mobile terminals use batteries as a power source. Because mobile terminals tend to consume a relatively large amount of power, use of disposable batteries as a power source is generally not preferable from an economic point of view. Hence, rechargeable batteries are widely used for supplying power to mobile terminals. With regard to charging a battery of a mobile terminal, the battery may be charged using a charging device when the battery is detached from the mobile terminal. However, the battery is more commonly charged using a charging device that charges the battery while the battery is installed in the mobile terminal. Charging the battery while the battery is installed in the mobile terminal is beneficial in view of user convenience and the difficulty of detaching or uninstalling the battery from the mobile terminal.

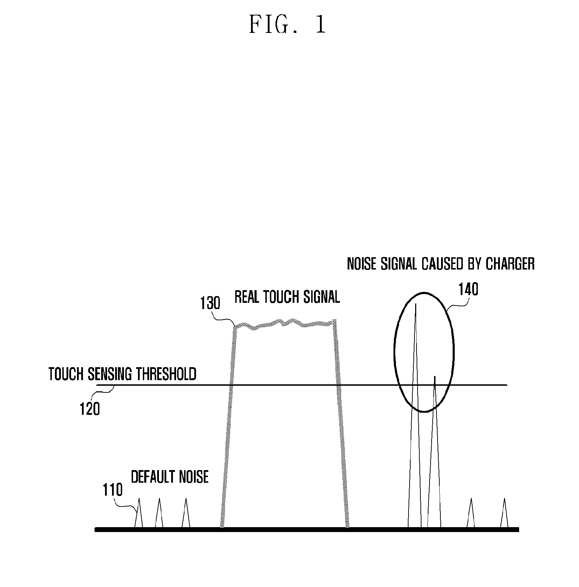

FIG. 1 illustrates a graph of a noise signal generated by a charging device.

When a charging device is connected to a mobile terminal, the charging device generates a noise signal, which affects operation of the Touch Screen Panel (TSP). Referring to FIG. 1, the TSP recognizes a signal having a strength that exceeds a touch sensing threshold 120 as a real touch signal. For example, because a default noise 110 has a strength lower than the touch sensing threshold 120, the default noise 110 is not recognized as a user touch signal by the TSP. Conversely, when a real touch signal 130 has a strength greater than the touch sensing threshold 120, the TSP recognizes the real touch signal 130 as a user touch signal. The charging device connected to the mobile terminal may generate a noise signal 140. Because the noise signal 140 exceeds the touch sensing threshold 120, the noise signal 140 may be recognized as a real touch signal, thereby causing an error in operation of the mobile terminal. That is, regardless of user intention, the mobile terminal may recognize the noise signal 140 as a user touch signal and operate accordingly.

Installed accessories or other environmental conditions may also generate noise signals affecting operation of the touch screen panel.

The touch screen panel senses a touch according to a predetermined touch sensing threshold, a predetermined touch sensing frequency, and a predetermined touch sensing frame. Hence, the touch sensing threshold, touch sensing frequency and touch sensing frame should be set such that noise signals generated by a charging device or other environmental conditions are not recognized as a real touch.

With recent adoption of Micro-USB as being a standard charging port for a mobile terminal, charging devices manufactured by third party manufactures independent of the mobile terminal manufacturer have become widely available. However, different charging devices may exhibit different operating characteristics (in particular, different noise signal characteristics). In addition, environmental conditions of the mobile terminal may vary with time. However, existing touch screen panels tend to continuously use touch sensing parameters configured at the time of manufacture or firmware upgrade. Adequate configuration of the touch sensing parameters in consideration of environmental conditions, particularly, an installed charging device may contribute to enhanced sensing of user touch input with reduced power consumption and without adverse influence of noise signals. Hence, to enhance touch sensing performance, it is necessary to provide a method that enables adequate configuration of touch sensing parameters.

In a related art method, touch sensing parameters for a touch screen panel are configured in consideration of a worst-case situation. In another related art method, a filter or the like is used to prevent malfunction due to a noise signal generated by a specific charging device. However, parameter configuration against a worst-case situation may degrade sensing of a user touch or cause excessive power consumption. Use of a filter may increase the size and weight of a mobile terminal and increase manufacturing costs. In some cases, use of a filter may be not a feasible solution.

Therefore, a need exists for a system and method for performing a self diagnosis of a device without the inconvenience caused when manually selecting a self diagnosis item from a computer or a user interface.

The above information is provided as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and apparatus that can configure touch sensing parameters so as to enhance sensing of user touch input while preventing influence of a noise signal.

In accordance with an aspect of the present invention, a method for configuring touch sensing parameters in a mobile terminal is provided. The method includes sensing an environmental condition, extracting values of touch sensing parameters corresponding to the sensed environmental condition, setting the touch sensing parameters to the extracted values of touch sensing parameters, and performing touch sensing according to the set touch sensing parameters.

In accordance with another aspect of the present invention, a mobile terminal capable of configuring touch sensing parameters is provided. The mobile terminal includes a storage unit for storing touch sensing parameters classified by an environmental condition, an environment detection unit for sensing an environmental condition, a parameter extraction unit for extracting values of touch sensing parameters corresponding to the sensed environmental condition from the storage unit, and a touch sensing unit for setting the touch sensing parameters to the extracted values of touch sensing parameters and for performing touch sensing according to the set touch sensing parameters.

In accordance with another aspect of the present invention, a non-transitory computer readable storage medium of a terminal is provided. The non-transitory computer readable storage medium stores a program for configuring touch sensing parameters in a mobile terminal. The program includes instructions to cause a computer to sense an environmental condition, extract values of touch sensing parameters corresponding to the sensed environmental condition, set the touch sensing parameters to the extracted values of touch sensing parameters, and perform touch sensing according to the set touch sensing parameters.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 illustrates a graph of a noise signal generated by a charging device according to an exemplary embodiment of the present invention;

FIG. 2 is a block diagram of a mobile terminal according to an exemplary embodiment of the present invention;

FIG. 3 is a flowchart of a procedure for configuring touch sensing parameters performed by a mobile terminal such as, for example, the mobile terminal illustrated in FIG. 2, according to an exemplary embodiment of the present invention;

FIG. 4 illustrates a connection between a mobile terminal according to an exemplary embodiment of the present invention and a charging device;

FIG. 5 illustrates detailed configurations of a TSP IC and a modem in a mobile terminal such as, for example, the mobile terminal illustrated in FIG. 4, according to an exemplary embodiment of the present invention; and

FIG. 6 is a sequence diagram of a procedure for configuring touch sensing parameters performed by a mobile terminal such as, for example, the mobile terminal illustrated in FIG. 4, according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

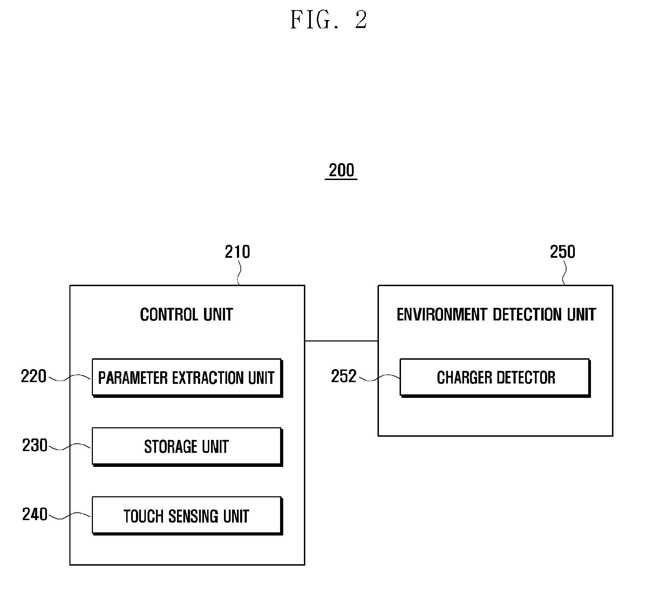

FIG. 2 is a block diagram of a mobile terminal according to an exemplary embodiment of the present invention.

Referring to FIG. 2, a mobile terminal 200 includes a control unit 210 and an environment detection unit 250. The environment detection unit 250 detects environmental conditions. Here, environmental conditions refer to surrounding conditions that may generate a noise signal affecting a touch sensing unit 240. For example, environmental conditions may include mounting of an accessory that generates a noise signal, and connecting a charging device.

The environment detection unit 250 may include a charger detector 252. The charger detector 252 identifies, for example, a charger ID of a charging device connected to the mobile terminal 200. In a standard 5-pin Micro USB connector used by a charging device, one of the five pins is an ID pin, which is connected to a ground resistor. As an example, the charger detector 252 may identify the charger ID by measuring the resistance of the ground resistor. The charger detector 252 may also detect detachment of the charging device. The charger detector 252 sends a sensed environmental condition to a parameter extraction unit 220.

In the above description, the charger detector 252 identifies a charger ID. In another exemplary embodiment of the present invention, the charger detector 252 may detect installation of an accessory that generates noise. As an example, the touch sensing parameters may be adjusted according to the detected accessory.

As another example, the charger detector 252 may sense an environmental condition and send the sensed environmental condition to the parameter extraction unit 220 at regular time intervals. Alternatively, the charger detector 252 may send a sensed environmental condition to the parameter extraction unit 220 only when the environmental condition is changed. For example, the charger detector 252 may send a sensed environmental condition to the parameter extraction unit 220 when there is connection or disconnection of a charging device.

The control unit 210 includes a parameter extraction unit 220, a storage unit 230 and a touch sensing unit 240. Although the parameter extraction unit 220, storage unit 230 and touch sensing unit 240 are described as being included in the control unit 210, some or all functions thereof may be performed by one or more other components with or without cooperation with the control unit 210.

The storage unit 230 stores environmental conditions and touch sensing parameters in an associated form. For example, as illustrated in Table 1, touch sensing parameters may be classified by charger ID (e.g., such that the charger ID corresponding to the charging device sensed by, for example, the charger detector is an environmental condition).

**Table 1**

| Charger ID | Touch sensing threshold | Touch sensing frequency | Touch sensing frame |
|---|---|---|---|
| 1 | 150 | 200 KHz | 2 |
| 2 | 180 | 1 MHz | 3 |
| 3 | 200 | 2 MHz | 4 |
| ... | ... | ... | ... |

Referring to Table 1, the touch sensing parameters include a touch sensing threshold, a touch sensing frequency and a touch sensing frame. Some or all of the touch sensing parameters may be changed depending upon selection of an environmental condition. A separate ID may be assigned to a case in which no charging device or accessory is detected. Accordingly, the storage unit 230 may store touch sensing parameter values corresponding to the case in which no charging device or accessory is detected (e.g., by the charger detector 252 and/or an associated accessory detector).

The touch sensing unit 240 recognizes a signal having a strength exceeding the preset touch sensing threshold as being a touch input. For example, if the touch sensing threshold is low, sensing of user touch may be good, however, the frequency of malfunction due to noise may increase. In other words, although the sensing of a user touch may be enhanced, the relatively low touch sensing threshold may result in a greater number of false or otherwise erroneously sensed user touches caused by noise that exceeds the touch sensing threshold. If the touch sensing threshold is high, the influence of noise may be reduced but sensing of user touch may become poor. For example, if the touch sensing threshold is set high, the likelihood that noise may exceed the touch sensing threshold is low, thereby increasing the likelihood that a signal exceeding the touch sensing threshold is a user touch. As an example, a high touch sensing threshold may improve the accuracy of determining whether a user touch is sensed. Hence, the touch sensing threshold is preferably high when considerable noise is expected owing to environmental conditions related to, for example, a charging device, and the touch sensing threshold is preferably low when little noise is expected owing to environmental conditions.

The touch sensing unit 240 performs touch sensing according to a preset touch sensing frequency. A high touch sensing frequency may lead to good touch sensing, however, a high touch sensing frequency may increase power consumption.

The touch sensing unit 240 performs touch sensing for a set touch sensing frame and uses a mean value during the touch sensing frame. If the touch sensing frame is long, then power consumption increases, sensing of user touch becomes poor, and the influence of noise lasting for a short duration decreases. Conversely, if the touch sensing frame is short, then power consumption decreases, sensing of user touch becomes good, and the influence of noise lasting for a short duration increases. Hence, it is preferred that the touch sensing frame is long when noise is expected to last for a long time.

The parameter extraction unit 220 extracts values of touch sensing parameters corresponding to an environmental condition sent by the environment detection unit 250 from the storage unit 230. For example, with reference to Table 1, if the parameter extraction unit 220 receives a charger ID of 1 from the charger detector 252 of the environment detection unit 250, it extracts 150 (e.g., the corresponding touch sensing threshold), 200 KHz (e.g., the corresponding touch sensing frequency) and 2 (e.g., the corresponding touch sensing frame) as touch sensing parameter values, and sends the extracted touch sensing parameter values to the touch sensing unit 240.

The touch sensing unit 240 sets the touch sensing parameters to the values received from the parameter extraction unit 220 and performs touch sensing on the basis of the set touch sensing parameters.

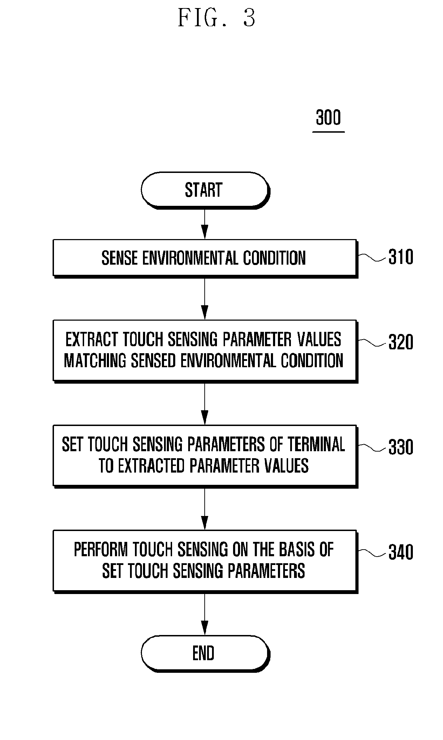

FIG. 3 is a flowchart of a procedure for configuring touch sensing parameters performed by a mobile terminal such as, for example, the mobile terminal illustrated in FIG. 2, according to an exemplary embodiment of the present invention.

Referring to the procedure 300 illustrated in FIG. 3, an environment detection unit 250 of the mobile terminal 200 senses an environmental condition at step 310. For example, the environment detection unit 250 may detect a charger ID of a charging device connected to the mobile terminal 200. The parameter extraction unit 220 extracts values of touch sensing parameters corresponding to the sensed environmental condition from the storage unit 230 at step 320. The touch sensing unit 240 sets the touch sensing parameters of the mobile terminal 200 to the extracted parameter values at step 330. The touch sensing unit 240 performs touch sensing on the basis of the set touch sensing parameters at step 340.

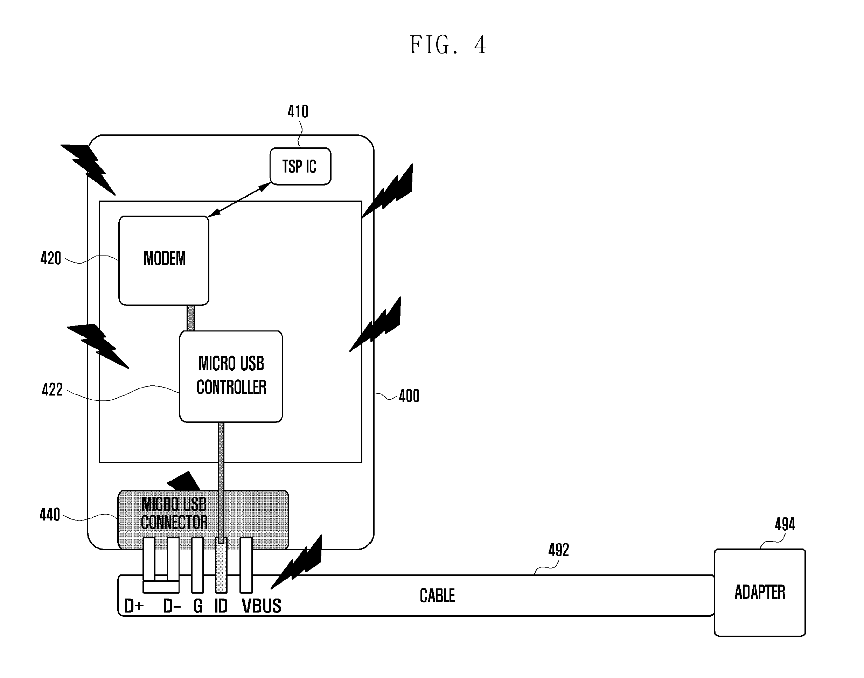

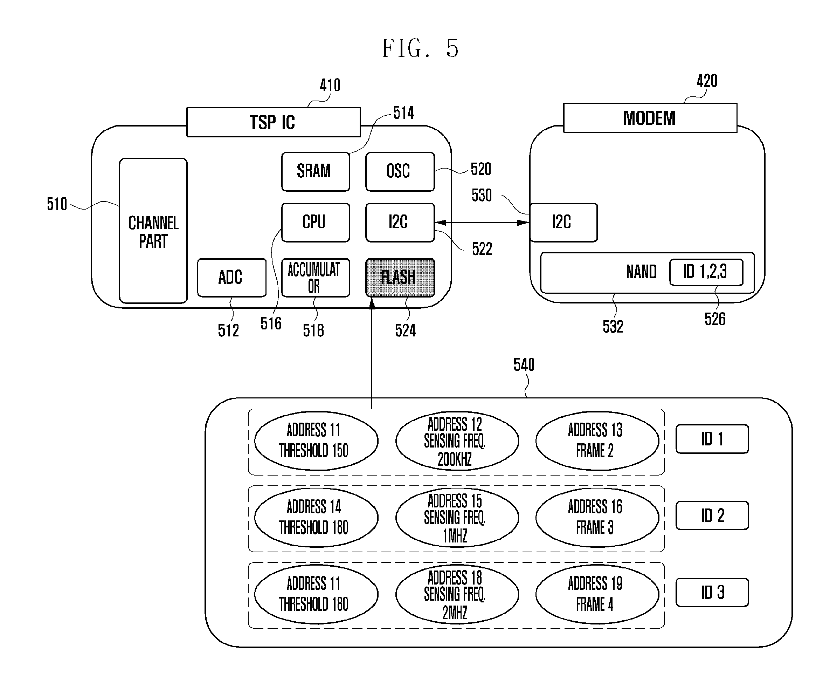

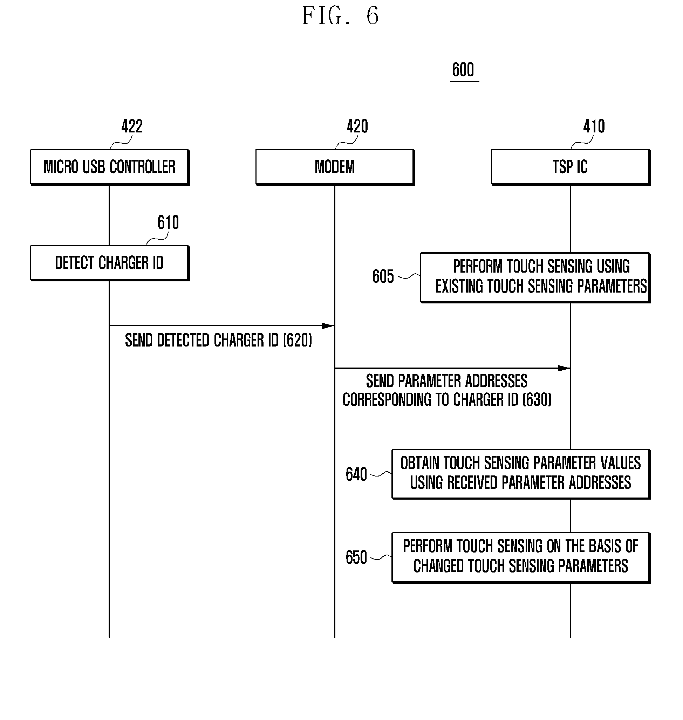

FIG. 4 illustrates a connection between a mobile terminal according to an exemplary embodiment of the present invention and a charging device. FIG. 5 illustrates detailed configurations of a TSP IC and a modem in a mobile terminal such as, for example, the mobile terminal illustrated in FIG. 4, according to an exemplary embodiment of the present invention. FIG. 6 is a sequence diagram of a procedure for configuring touch sensing parameters performed by a mobile terminal such as, for example, the mobile terminal illustrated in FIG. 4, according to an exemplary embodiment of the present invention.

Referring to FIG. 4, a charging device is connected with a mobile terminal 400. The charging device includes a cable 492, an adapter 494, and a connector (e.g., a five-pin Micro USB connector) attached to one end of the cable 492. The connector (e.g., the five-pin Micro USB connector) of the charging device can be coupled with a connector (e.g., a Micro USB connector 440) of the mobile terminal 400. The five-pin Micro USB connector of the charging device includes a "D+" pin, "D-" pin, "G" pin, "ID" pin, and "VBUS" pin. Here, the "ID" pin is connected to a ground resistor. FIG. 4 illustrates a five-pin Micro USB charger corresponding to the charging device according to an exemplary embodiment of the present invention. The five-pin Micro USB charger is used as an example of a charging device. However, exemplary embodiments of the present invention may also be applied to any charging device that provides a charger or accessory identification mechanism to the mobile terminal 400.

The mobile terminal 400 according to an exemplary embodiment of the present includes a TSP IC 410, a modem 420, a Micro USB controller 422, and a Micro USB connector 440.

The Micro USB connector 440 may be coupled with a charging terminal (e.g., a five-pin Micro USB connector) of the charging device.

Referring to and the configurations of the TSP IC and the modem in a mobile terminal illustrated in FIG. 5 and to the procedure 600 for configuring sense parameters performed by a mobile terminal illustrated in FIG. 6, the Micro USB controller 422 detects a charger ID of a charging device at step 610. For example, the Micro USB controller 422 may detect the charger DI of a charging device by measuring the resistance of a resistor connected to the ID pin. That is, according to an exemplary embodiment of the present invention the Micro USB controller 422 may function as the charger detector 252 illustrated in FIG. 2. The Micro USB controller 422 sends the detected charger ID to the modem 420 at step 620. The modem 420 may include a NAND flash memory 532 and an Inter-Integrated Circuit (I2C) unit 530. According to exemplary embodiments of the present invention, the NAND flash memory 532 may be interchangeable with a storage device of a different type. In other words, the NAND flash memory 532 is used merely as an example. The NAND flash memory 532 stores addresses of touch sensing parameters associated with charger IDs. For example, the NAND flash memory 532 may store the addresses of touch sensing parameters associated with charger IDs in a NAND flash storage portion 526. As an example, the NAND flash storage portion 526 may be a Look-Up Table (LUT) storing the respective touch sensing parameters and associated charger IDs. The modem 420 extracts addresses of touch sensing parameters associated with the received charger ID from the NAND flash memory 532 and places the extracted parameter addresses on the I2C unit 530, which then transmits the extracted parameter addresses to an I2C unit 522 of the TSP IC 410 at step 630. As an example, the I2C unit 530 may communicate with the I2C unit 522 through an I2C protocol. According to exemplary embodiments of the present invention, the I2C unit 530 and the I2C unit 522 may be replaced with different types of communication components

Referring to FIG. 5, the TSP IC 410 includes a channel unit 510, an Analog-to-Digital Converter (ADC) 512, a Static Random Access Memory (SRAM) 514, a Central Processing Unit (CPU) 516, an accumulator 518, an OSCillator (OSC) 520, an I2C unit 522, and a flash memory 524. Components or modules necessary for regular touchscreen operations are not described.

The TSP IC 410 performs touch sensing using existing touch sensing parameters before reception of parameter addresses at step 605. The I2C unit 522 of the TSP IC 410 receives parameter addresses from the modem 420 at step 630. The CPU 516 reads touch sensing parameter values from locations of the flash memory 524 indicated by the received parameter addresses at step 640. The flash memory 524 stores predefined sets of touch sensing parameter values. For example, the predefined sets of touch sensing parameter values may be stored in touch sensing parameter value storage portion 540 of the flash memory 524. The parameter value storage portion 540 may be a Look-Up Table (LUT) storing charger IDs and corresponding parameter values. For example, when a charging device having charger ID 1 is connected, the modem 420 sends 11, 12, and 13 as parameter addresses, or 11 as the first parameter address to the TSP IC 410. The CPU 516 extracts 150 (touch sensing threshold), 200 KHz (touch sensing frequency) and 2 (touch sensing frame) as touch sensing parameter values from the locations indicated by the received parameter address.

The CPU 516 performs touch sensing on the basis of the extracted touch sensing parameter values at step 650. The TSP IC 410 continues to utilize the current touch sensing parameter values until new parameter addresses are received.

According to another exemplary embodiment of the present invention, referring to FIGs. 4 to 6, the TSP IC 410 and the modem 420 cooperate so as to perform functions corresponding to functions of the parameter extraction unit 220, the storage unit 230 and the touch sensing unit 240 of FIG. 2. In other words, functions of the parameter extraction unit 220, the storage unit 230 and the touch sensing unit 240 of FIG. 2 may implemented by the TSP IC 410 and the modem 420.

As described above, the touch sensing parameters are adequately changed according to environmental conditions. Hence, it is possible to heighten touch sensing efficiency and to prevent the occurrence of errors. In addition, manufacturing costs may be reduced by excluding a filter or the like used for noise reduction.

According to an exemplary embodiment of the present invention, a method and apparatus are provided that can configure touch sensing parameters so as to enhance sensing of user touch input while preventing influence of a noise signal.

It is known to those skilled in the art that blocks of a flowchart and a combination of flowcharts may be represented and executed by computer program instructions. These computer program instructions may be loaded on a processor of a general purpose computer, a special computer or programmable data processing equipment. When the loaded program instructions are executed by the processor, they create a means for carrying out functions described in the flowchart. As the computer program instructions may be stored in a non-transitory computer readable memory that is usable in a specialized computer or a programmable data processing equipment, it is also possible to create articles of manufacture that carry out functions described in the flowchart. As the computer program instructions may be loaded on a computer or a programmable data processing equipment, when executed as processes, they may carry out steps of functions described in the flowchart.

In view of the above, certain aspects of the present invention can also be embodied as computer readable code on a computer readable recording medium. A computer readable recording medium is any data storage device that can store data which can be thereafter read by a computer system. Examples of the compute readable recording medium include Read-Only Memory (ROM), Random-Access Memory (RAM), CD-ROMs, magnetic tapes, floppy disks, and optical data storage devices. The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

A block of a flowchart may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order.

According to exemplary embodiments of the present invention, the word "unit", "module" or the like may refer to a software component or hardware component such as an FPGA or ASIC capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose large components and units. Components and units may be configured to drive a device or one or more processors in a secure multimedia card.

The mobile terminal according to exemplary embodiments of the present invention may be a portable electronic device, such as a cellular phone, a Personal Digital Assistant (PDA), a navigation aid, a digital broadcast receiver, a portable multimedia player (PMP), a tablet computer, and/or the like.

The description of the various embodiments is to be construed as exemplary only and does not describe every possible instance of the invention. Therefore, it should be understood that various changes may be made and equivalents may be substituted for elements of the invention.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for configuring touch sensing parameters in a mobile terminal, the method comprising:
sensing an environmental condition;
extracting values of touch sensing parameters corresponding to the sensed environmental condition;
setting the touch sensing parameters to the extracted values of touch sensing parameters; and
performing touch sensing according to the set touch sensing parameters.

2. The method of claim 1, wherein the sensing of the environmental condition comprises detecting a charger Identification (ID) of a charging device connected to the mobile terminal.

3. The method of claim 2, wherein the detecting of the charger ID of the charging device comprises measuring resistance of a resistor associated with the charger ID.

4. The method of claim 2, wherein the extracting of the values of the touch sensing parameters comprises extracting one or more of a touch sensing threshold value, a touch sensing frequency value, and a touch sensing frame value corresponding to the detected charger ID as touch sensing parameter values.

5. The method of claim 2, wherein the performing of the touch sensing comprises sensing an input signal and determining whether the input signal corresponds to a user input signal.

6. The method of claim 5, wherein the determining of whether the input signal corresponds to the user input signal comprises comparing the input signal to the set touch sensing parameters.

7. The method of claim 1, wherein the sensing of the environmental condition comprises detecting an accessory Identification (ID) of an accessory connected to the mobile terminal.

8. A mobile terminal capable of configuring touch sensing parameters, the mobile terminal comprising:
a storage unit for storing touch sensing parameters classified by an environmental condition;
an environment detection unit for sensing an environmental condition;
a parameter extraction unit for extracting values of touch sensing parameters corresponding to the sensed environmental condition from the storage unit; and
a touch sensing unit for setting the touch sensing parameters to the extracted values of touch sensing parameters, and for performing touch sensing according to the set touch sensing parameters.

9. The mobile terminal of claim 8, wherein the environment detection unit comprises a charger detector that detects a charger Identification (ID) of a charging device connected to the mobile terminal.

10. The mobile terminal of claim 9, wherein the charger detector detects the charger ID of the charging device by measuring resistance of a resistor associated with the charger ID.

11. The mobile terminal of claim 9, wherein the parameter extraction unit extracts one or more of a touch sensing threshold value, a touch sensing frequency value, and a touch sensing frame value corresponding to the detected charger ID as touch sensing parameter values.

12. The mobile terminal of claim 9, wherein the touch sensing unit senses an input signal.

13. The mobile terminal of claim 12, wherein the touch sensing unit determines whether the input signal corresponds to a user input signal.

14. The mobile terminal of claim 13, wherein the touch sensing unit determines whether the input signal corresponds to the user input signal by comparing the input signal to the set touch sensing parameters.

15. A non-transitory computer readable storage medium of a terminal storing a program for configuring touch sensing parameters in a mobile terminal, the program comprising instructions to cause a computer to:
sense an environmental condition;
extract values of touch sensing parameters corresponding to the sensed environmental condition;
set the touch sensing parameters to the extracted values of touch sensing parameters; and
perform touch sensing according to the set touch sensing parameters.
